# EUROPEAN PATENT APPLICATION

(11) **EP 1 614 667 A1**
(43) Date of publication of application: **11.01.2006**
(21) Application number: 05106126.5
(22) Date of filing: 06.07.2005
(51) Int. Cl.: C04B 16/08, C04B 38/10, C04B 28/00

(54) **Cementitious composition for a cementitious end-product, cementitious end-product and production method thereof**

(30) Priority: 08.07.2004 IT MI20041362
(71) Applicant: G.F.C. S.p.A., 24040 Osio Sopra BG (IT)
(72) Inventor: Cividini, Eugenio, 24122, Bergamo (IT)
(74) Representative: Coppo, Alessandro

(57) **Abstract**

Cementitious composition for the production of a cementitious end-product having structural capacities comprising water, at least one binder, at least one inert material, and also expanded polystyrene, at least one fluidifying additive and at least one foaming agent.
Production method of a cementitious end-product, comprising the following phases: a) charging the following products in sequence into a mixer having a horizontal axis: expanded polystyrene, at least one inert material, at least one binder, reinforcing fibres, water, at least one fluidifying additive and at least one foaming agent, b) mixing for a pre-established time, obtaining a cementitious composition, c) depositing a first layer of the cementitious in a formwork.

## Description

The present invention relates to a cementitious composition for the production of a cementitious end-product, a cementitious end-product and a relative production method.

There is an increasing demand for cementitious concrete end-products with reduced percentages of inert material, such as for example sand and/or gravel, in order to have lighter cementitious end-products which are consequently easier to transport.

This is particularly important when said products are used as prefabricated elements for civil and industrial constructions.

These cementitious end-products are produced with a cementitious composition of so-called lightened concrete, i.e. concrete in which at least an inert material, normally sand and/or gravel, is partly substituted with another material having a lower specific weight than sand and/or gravel.

These prefabricated cementitious end-products made of light concrete have the disadvantage of having a low mechanical resistance and can therefore only be used as non-structural elements.

Said end-products consequently have a limited field of application.

An objective of the present invention is to provide a cementitious composition which has a reduced content of inert material such as, for example, sand and/or gravel in the composition itself, to obtain a cementitious end-product made of light concrete having a low density and at the same time structural capacities.

A further objective is to provide a cementitious end-product having a low cost and which can be easily transported.

Another objective is to produced a cementitious end-product which can be used as a wall or prefabricated covering element.

A further objective is to provide a cementitious end-product which has a good surface finishing.

Yet another objective is to provide a method for the production of a cementitious end-product which avoids problems of water leakage from the mixer.

These objectives according to the present invention are achieved by producing a cementitious composition for the production of a cementitious end-product as specified in claim 1.

Further characteristics of the invention are indicated in the subsequent claims.

The characteristics and advantages of a cementitious composition according to the present invention will appear more evident from the following illustrative and non-limiting description of the present invention.

According to a first aspect of the present invention, a cementitious composition is provided for the production of a cementitious end-product having structural properties.

Said cementitious composition comprises at least one binder, water and at least one inert material.

Said cementitious composition also comprises expanded polystyrene, at least one fluidifying agent and at least one foaming agent.

Said expanded polystyrene is in the form of granules which are externally coated with a resin or polymer which allows it to be wet with water.

The granules of said expanded polystyrene have a diameter varying from 3 to 10 mm, and preferably have a diameter of about 5 mm.

Said expanded polystyrene is preferably present in a percentage ranging from 30% to 90% by volume and even more preferably in a percentage ranging from 65% to 80% by volume.

Said at least one fluidifying additive for concrete is preferably a fluidifying agent of the naphthalene-sulfonic, melaminic or acrylic type.

Said at least one fluidifying additive is preferably of the acrylic type.

Furthermore, the presence of at least one fluidifying additive advantageously allows less water to be used and this considerably reduces the danger of crumbling after solidification of the cementitious composition.

During the preparation and processing of the cementitious composition, said at least one fluidifying additive allows greater flow between the various particles of the cementitious composition itself, whereas after a pre-established time it increases, together with said at least one binder, the cohesion and fixing between the components themselves.

In other words, said at least one additive acts first as a lubricating agent and subsequently as a fixing agent.

Said at least one foaming agent, on the other hand, has the function of increasing the processability of the cementitious composition.

It exerts its function after being mixed with the other components of the cementitious composition.

Following mechanical mixing, it creates a certain number of finely dispersed small bubbles in said cementitious composition which, in turn, due to these, increases its volume.

Said at least one fluidifying additive is preferably present in a percentage ranging from 1% to 3% by volume.

Said at least one foaming agent is preferably present in a percentage ranging from 1% to 3% by volume.

Said cementitious composition also comprises reinforcing fibres, preferably in a percentage ranging from 1% to 3% by weight.

Said at least one binder is preferably cement, present in a percentage ranging from 5% to 15% by weight.

Said at least one inert material is preferably sand, present in a percentage ranging from 2% to 5% by weight.

According to the present invention, a cementitious end-product is also provided, having structural capacities and obtained from a cementitious composition of the type described above and preferably comprising in its interior at least one metallic reinforcement.

Said cementitious end-product can be used as a prefabricated structural element for civil and industrial constructions.

Said cementitious end-product can be used in particular as a partition wall, or as a structural element of a ceiling or roof or cover for civil and industrial constructions.

Said cementitious end-product is also suitable for sustaining its own weight and also external loads.

For example, when said cementitious end-product is used as a roof element, it is capable of sustaining possible deposits of snow or other material and also loads due to strong gusts of wind.

Said cementitious end-product has a low density, preferably of about 600 kg/m³, or in any case varying from 500 kg/m³ to 800 kg/m³.

A cementitious end-product having these characteristics is advantageously easy to transport as it is light, and is at the same time load-bearing and can therefore also be used for structural applications.

Furthermore, the high content of expanded polystyrene advantageously allows a good soundproofing and thermal non-conductivity.

According to a further aspect of the present invention a production method is provided of a cementitious end-product having a cementitious composition of the type described above and having structural capacities.

Said method comprises the following phases: a) charging the following products in sequence into a mixer having a horizontal axis: expanded polystyrene, at least one inert material, at least one binder, reinforcing fibres, water, at least one fluidifying additive and at least one foaming agent, b) mixing for a pre-established time, obtaining a cementitious composition, c) depositing a first layer of the cementitious in a formwork.

Said pre-established time preferably ranges from 3 to 4 minutes.

Said expanded polystyrene, said at least one inert material, said at least one binder, said reinforcing fibres, said water, said at least one fluidifying additive and said at least one foaming agent in said phase a) are preferably charged into said mixer having a horizontal axis in this sequence and correspond to the elements present in the cementitious composition described above in the percentages specified above.

Said phase c) preferably also comprises the following phase:
d) vibrating said formwork for a pre-established time.

In this way it is advantageously possible to deposit on the bottom of said formwork a part of the cement present in the cementitious composition deposited so as to obtain a useful surface with a good surface finishing, having the same aesthetic characteristics of a cement wall.

Said method preferably also comprises the following phase:
e) inserting at least one metallic reinforcement in said formwork.

Said method preferably also comprises the following phase:
f) depositing a further layer of cementitious composition inside said formwork, obtaining a cementitious end-product.

Said method also comprises the following phase:
g) heating said cementitious end-product.

Said phase g) is effected following the regulations provided for prefabricated cementitious end-products.

Using a mixer with a horizontal axis and charging the elements forming the cementitious composition according to the present invention in said sequence, it is advantageously possible to avoid water leakage from the mixer itself, obtaining a cementitious composition with a homogeneous and well-defined composition and structure.

In this way, it is also possible to avoid the use of mixers equipped with sealing washers for specifically preventing water leakage during the production of the cementitious composition.

It can thus be seen that a cementitious composition for the production of a cementitious end-product and the relative production method according to the present invention achieve the objectives indicated above.

The cementitious composition for the production of a cementitious end-product and the relative production method of the present invention thus conceived can undergo numerous modifications and variations, all included in the same inventive concept.

Furthermore, in practice, the materials used, as also the dimensions and components, can vary according to technical demands.

## Claims

1. A cementitious composition for the production of a cementitious end-product having structural capacities comprising water, at least one binder, at least one inert material, **characterized in that** it comprises expanded polystyrene, at least one fluidifying additive and at least one foaming agent.

2. The cementitious composition according to claim 1, **characterized in that** said at least one fluidifying additive for concrete is a fluidifying additive of the naphthalenesulfonic or melaminic or acrylic type.

3. The cementitious composition according to claim 1 or 2, **characterized in that** said at least one fluidifying additive is of the acrylic type.

4. The cementitious composition according to any of the claims from 1 to 3, **characterized in that** said expanded polystyrene is in the form of granules each of which is coated with a resin or polymer wettable with water.

5. The cementitious composition according to claim 4, **characterized in that** said granules of said expanded polystyrene have a diameter ranging from 3 to 10 mm.

6. The cementitious composition according to claim 4, **characterized in that** said granules of said expanded polystyrene have a diameter of about 5 mm.

7. The cementitious composition according to any of the claims from 1 to 6, **characterized in that** it comprises reinforcing fibres.

8. The cementitious composition according to any of the claims from 1 to 7, **characterized in that** said expanded polystyrene is present in said cementitious composition in a percentage ranging from 30% to 90% by volume.

9. The cementitious composition according to any of the claims from 1 to 8, **characterized in that** said expanded polystyrene is present in said cementitious composition in a percentage ranging from 65% to 80% by volume.

10. The cementitious composition according to any of the claims from 1 to 9, **characterized in that** said at least one fluidifying agent is present in a percentage ranging from 1% to 3% by volume.

11. The cementitious composition according to any of the claims from 1 to 10, **characterized in that** said at least one foaming agent is preferably present in a percentage ranging from 1% to 3% by volume.

12. The cementitious composition according to any of the claims from 7 to 11, **characterized in that** said reinforcing fibres are present in said cementitious composition in a percentage ranging from 1% to 3% by weight.

13. The cementitious composition according to any of the claims from 1 to 12, **characterized in that** said at least one binder is cement.

14. The cementitious composition according to claim 13, **characterized in that** said cement is present in said cementitious composition in a percentage ranging from 5% to 15% by weight.

15. The cementitious composition according to any of the claims from 1 to 14, **characterized in that** said at least one inert material is preferably sand.

16. The cementitious composition according to claim 15, **characterized in that** said sand is present in said cementitious composition in a percentage ranging from 2% to 5% by weight.

17. A cementitious end-product comprising a cementitious composition according to any of the claims from 1 to 16.

18. The cementitious end-product according to claim 17, **characterized in that** it comprises at least one metallic reinforcement in its interior.

19. A production method of a cementitious end-product, **characterized in that** it comprises the following phases: a) charging into a mixer with a horizontal axis in sequence expanded polystyrene, at least one inert material, at least one binder, reinforcing fibres, water, at least one fluidifying additive and at least one foaming agent, b) mixing for a pre-established time, obtaining a cementitious composition, c) depositing a first layer of said cementitious composition in a formwork.

20. The method according to claim 19, **characterized in that** said pre-established time of said phase b) ranges from 3 to 4 minutes.

21. The method according to claim 19 or 20, **characterized in that** said phase c) comprises the following phase:
d) vibrating said formwork for a pre-established time.

22. The method according to any of the claims from 19 to 21, **characterized in that** it comprises the following phase:
e) inserting at least one metallic reinforcement into said formwork.

23. The method according to any of the claims from 19 to 22, **characterized in that** it comprises the following phase:
f) depositing a further layer of cementitious composition inside said formwork, obtaining a cementitious end-product.

24. The method according to any of the claims from 19 to 23, **characterized in that** it comprises the following phase:
g) heating said cementitious end-product.

25. Use of a cementitious end-product according to claim 17 or 18 as a structural element for civil and industrial constructions.

26. Use of a cementitious end-product according to claim 17 or 18 as a structural covering element for civil and industrial constructions.

27. Use of a cementitious end-product according to claim 17 or 18 as a structural element of a wall or ceiling for civil and industrial constructions.
